# EUROPEAN PATENT SPECIFICATION

(11) **EP 0 376 559 B1**
(45) Date of publication and mention of the grant of the patent: **04.08.1993**
(21) Application number: 89313116.9
(22) Date of filing: 14.12.1989
(51) Int. Cl.: C08F 10/00, C08F 2/34, C08F 2/40

(54) **Process for alpha -olefin gas-phase polymerization controlled by the simultaneous addition of an activator and an activity retarder to the polymerization medium**
Verfahren für alpha-Olefin-Polymerisation in der Gasphase, kontrolliert durch gleichzeitiges Zuführen eines Aktivierungs- und eines Inhibierungsmittels
Procédé de polymérisation d'alpha-oléfine en phase gazeuse contrôlé par l'addition simultanée d'un agent d'activation et d'un agent ralentisseur d'activité

(30) Priority: 22.12.1988 FR 8817551
(43) Date of publication of application: 04.07.1990
(73) Proprietor: BP Chemicals Limited, London EC2M 7BA (GB)
(72) Inventor: Bernard, Jean-Claude BP Chemicals S.A., BP No. 6 F-13117 Lavera (FR); Berruyer, Claudine BP Chemicals S.A., BP No. 6 F-13117 Lavera (FR); Havas, Laszlo BP Chemicals S.A., BP No. 6 F-13117 Lavera (FR)
(74) Representative: Hymers, Ronald Robson

(56) References cited:
- EP-A- 0 170 410
- EP-A- 0 188 914
- EP-A- 0 201 647

## Description

The present invention relates to a process for the alpha-olefin gas-phase polymerisation in a fluidized and/or mechanically agitated bed reactor, in the presence of a catalyst based on a transition metal.

It is known to polymerize continuously in the gas phase one or more alpha-olefins, such as ethylene or propylene, in a fluidized and/or mechanically agitated bed reactor, in the presence of a catalyst based on a transition metal belonging to groups IV, V or Vl of the periodic table of the elements, in particular in the presence of a catalyst of the Ziegler-Natta type or a catalyst based on chromium oxide. The polymer particles in the process of forming are kept in the fluidized and/or agitated state in a gaseous reaction mixture containing the alpha-olefin or alpha-olefins to be polymerized, which are introduced continuously into the reactor. The catalyst is introduced continuously or intermittently into the reactor while the polymer constituting the fluidized and/or mechanically agitated bed is withdrawn from the reactor, also continuously or intermittently. The heat of the polymerization reaction is essentially removed by the gaseous reaction mixture, which passes through a heat transfer means before being recycled into the reactor.

When a process for the alpha-olefin gas-phase polymerisation is carried out in the presence of a catalyst of high activity, it has been observed that small variations in the course of the polymerization, resulting for example from slight fluctuations in the quality of the catalyst or of the alpha-olefins used in the reaction, can cause changes in the kinetic behaviour and the activity of the catalyst and of the active polymer particles forming the bed. These small variations are known to have particularly adverse effects in a gas phase polymerization process because of the fact that the heat exchange capacity of a gas phase is much lower than that of a liquid phase. In particular, they can cause an unexpected increase, which is difficult to predict, in the amount of heat evolved by the reaction. In general, this heat cannot be removed sufficiently rapidly and efficiently by the gaseous reaction mixture passing through the bed, and can give rise to the appearance of hot spots in the bed, as well as the formation of agglomerates of molten polymer. When hot spots appear in the bed, it is generally too late to prevent the formation of agglomerates. However, if the reaction conditions are corrected sufficiently early, especially by lowering the polymerization temperature or pressure, or by reducing the feeding rate of the catalyst into the reactor, in order to restrict the adverse effects of unexpected superactivation, the amount and size of the agglomerates formed can be reduced to a certain extent. During this period, however, it will not be possible to avoid a drop in the polymer production and a deterioration of the quality of the polymer manufactured. Consequently, if it is desired to avoid these disadvantages, the general polymerization conditions are usually chosen with a safety margin such that hot spots and agglomerates cannot form. Nevertheless, the application of such conditions unavoidably results either in a substantial loss of production, or in a deterioration of the quality of the polymer manufactured, especially an increase of the content of catalyst residues in the polymer.

These superactivation phenomena are likely to occur especially when using a high yield catalyst whose polymerization activity can vary considerably for very small variations in the proportion of impurities in the polymerization medium. This is the case in particular with catalysts of the Ziegler-Natta type based on magnesium, halogen and a transition metal such as titanium, vanadium or zirconium. Such superactivation phenomena can also develop when using comonomers which are capable of activating the polymerization of an alpha-olefin, especially in the case of the copolymerization of ethylene with alpha-olefins containing from 3 to 8 carbon atoms (Polymer Science USSR, vol. 22. 1980, pages 448-454).

It is also known, according to EP-A-0 099 774 and 0 257 316, to polymerize propylene with the aid of a catalyst of the Ziegler-Natta type in a fluidized-bed reactor into which an organo-aluminium compound, as a cocatalyst, and an aromatic ester, as a selectivity control agent, are introduced continuously at a constant rate and in a constant molar ratio with the catalyst. It is also possible to cont.rol the isotacticity of the polypropylene manufactured in this way by adjusting the ratio of the amounts of cocatalyst and selectivity agent introduced into the reactor, according to a model which correlates the isotacticity of the polymer wit h the productivity of the catalyst. However, this process and the model used does not enable the polymerisation rate, or the polymer production, or even the transition metal content in the polymer manufactured, to be kept constant, when the quality of the reactants, the activity of the catalyst or the supply of catalyst to the reactor fluctuate unpredictably during the polymerisation.

In our copending European Patent Application 89308848.4 (published as EP-A-0359444 on 21 March 1990) we describe a process for the continuous gas phase polymerization of one or more alpha-olefins in a reactor having a fluidized and or mechanically stirred bed, with the aid of a catalyst and of an activity retarder, in which the polymerization is carried out by bringing a catalyst based on a transition metal belonging to groups IV, V or VI of the Periodic Classification of the elements into contact with the alpha-olefin(s) and a very small amount of the activity retarder which is introduced continuously into the reactor at a flow rate which is varied with time so as to keep substantially constant either the polymerization rate or the content of transition metal in the polymer produced.

The process may also be performed in the presence of a cocatalyst selected from organometallic compounds of metals belonging to Groups I, II or III of the periodic Table; the cocatalyst may be present as such in the process orwith the catalyst in the form of a prepolymer. There is no disclosure of continuous addition of cocatalyst but in varying amount.

A process for a gas phase polymerization of alpha-olefin has now been found which makes it possible to overcome the above-mentioned disadvantages. In particular, the process makes it possible to manufacture polymers continuously, with a high productivity and a low content of catalyst residues, without supporting the usual consequences of unavoidable slight variations in the quality of the alpha-olefins or of the catalyst, or in the supply of catalyst to the reactor.

It is found that, by virtue of this process, it is now possible to produce continuously a polymer of a substantially constant and satisfactory quality, with a high degree of reproducibility and high yield, without forming agglomerates.

The present invention therefore relates to a process for a continuous gas phase polymerization of one or more alpha-olefins in a fluidized and/or mechanically agitated bed reactor, with the aid of a catalyst based on a transition metal belonging to groups IV, V or Vl of the Periodic Table of the elements and in the presence of an activator and an activity retarder, characterized in that during the polymerization the activator and the activity retarder are introduced continuously and simultaneously into the reactor in very small amounts, in a molar ratio and at flow rates which are varied with time, so as to keep substantially constant either the polymerization rate or the content of transition metal in the polymer produced.

The activity retarder is selected from a wide variety of products which are preferably gases or volatile liquids under polymerization conditions and are capable of reducing the polymerization rate of an alpha-olefin in the presence of a catalyst based on a transition metal. The activity retarder can be selected especially from polymerization inhibitors or from the poisons known for this type of reaction. Activity retarders which can be selected in particular are carbon monoxide, carbon dioxide, carbon disulphide, carbon oxysulphide, nitrogen oxides and peroxides, oxygen, alcohols, aldehydes, ketones, thiols and water. The activity retarder can also be selected from electron donor compounds capable of complexing the catalyst and reducing the polymerization rate, in particular from organic compounds containing at least one oxygen, sulphur, nitrogen and/or phosphorus atom. It can be selected from a wide variety of electron donor compounds such as amines, amides, phosphines, sulphoxides, sulphones, esters, ethers or thioethers.

It is particularly recommended to use an activity retarder in an amount which is capable of reducing the polymerization rate without substantially affecting the qualities and the properties of the polymer manufactured, such as the melt index, the melt flow ratio, the average molecular weight, the molecular weight distribution or the isotacticity of the polymer. In fact, since it is the very principle of the present invention that the rate of introduction of the activity retarder into the reactor can vary with time, the properties of the polymer manufactured could vary considerably during the reaction if the amount of the activity retarder used had a substantial influence on the properties of the polymer. Such a result would be contrary to the object of the present invention. However, in view of the conditions under which the activity retarder is used in the present process, especially the very small amount introduced into the reactor, the choice of activity retarder can still be made from a large number of products such as polymerization inhibitors and electron donor compounds. It is possible to use the conventional polymerization poisons, preferably alcohols, carbon monoxide, carbon dioxide or oxygen, as well as electron donor compounds, preferably amides and aliphatic or cyclic ethers having not more than 10 carbon atoms. When the polymer manufactured is of a sterospecific nature, such as polypropylene, the activity retarder is preferably selected amongst the conventional polymerization poisons or inhibitors and amongst the electron donor compounds which are not considered as being a selectivity control agent, such as aromatic esters.

The activity retarder can be used in the pure state or, preferably, diluted in a gas such as nitrogen, ordis- solved in a readily volatile liquid hydrocarbon. A further possibility is to use a mixture of two or more activity retarders.

The activator used according to the present invention is selected from a wide variety of products which are preferably gases or volatile liquids under polymerization conditions and are capable of increasing the polymerization rate of an alpha-olefin in the presence of a catalyst based on a transition metal. The activator can be selected from organometallic compounds of metals belonging to groups I, II or III of the periodic table of the elements, in particular from organoaluminium, organozinc or organomagnesium compounds. The use of organoaluminium compounds, in particular triethylaluminium, diethylaluminium chloride, tri-n-propylaluminium, tri-n-butyl-aluminium and triisobutylaluminium, is preferred.

The activator can be used in the pure state or, preferably, diluted in a gas, or diluted or dissolved in a readily volatile liquid hydrocarbon. It is possible to use a mixture of two or more activating agents.

According to the present invention, it has been found that the activator and the activity retarder must be introduced into the polymerization reactor continuously and simultaneously. In practice, they are introduced into the reactor at the same time as the alpha-olefin(s), continuously or in an almost continuous, intermittent manner, so that the interruption time is so short that it cannot affect the polymerization rate which is preferably substantially kept constant. If the introductions of the activatorand of the activity retarder are interrupted, or if the interruption times are too long, the activity of the catalyst may change. The polymerization rate is no longer controlled and may change rapidly with the quality of the reactants and of the catalyst which may result in the production of agglomerates.

It has been found that the activator is introduced into the reactor in a very small amount such that the molar ratio of the amount of activator introduced to the amount of alpha-olefin or alpha-olefins introduced is 10-⁷ to 10-4, preferably 2 x 10-⁷ to 5 x 10-⁵. It is important for a minimum amount of activator to be constantly introduced into the reactor, i.e. to ensure a minimum rate of introduction of the activator into the reactor. The amount of the activator generally depends on the type of the gas phase polymerization system used and on the type of the catalyst used. The lowest amount of the activator to be used and consequently the minimum flow rate of the introduction of the activator into the reactor can be easily determined by the minimum value of the catalyst activity which is capable of giving the desired quality of the polymer to be produced. Furthermore, the highest amount of the activator to be used and hence the maximum flow rate of the introduction of the activator into the reactor can be directly determined by the maximum heat exchange of the gas phase polymerization system, or by the maximum polyolefin production, which does not induce the formation of agglomerates.

The activity retarder is also introduced into the polymerization reactor continuously, in an amount which is generally so small that it is not possible to measure the proportion of this retarder in the gaseous reaction mixture circulating in the reactor. In practice, the activity retarder is introduced into the reactor in an amount such that the molar ratio of the amount of activity retarder introduced to the amount of alpha-olefin or alpha-olefins introduced is 10-⁸ to 10-^{s}, preferably 5 x 10-⁸ to 2 x 10-^{s}. It has been found, surprisingly, that the continuous production of a polyolefin of a constant quality with a high productivity and a high degree of reproducibility without forming agglomerates, requires the introduction of a minimum amount of activity retarder into the reactor, i.e. it is necessary to ensure a minimum rate of introduction of the activity retarder into the reactor. This surprising result is observed especially when the process is carried out in large industrial reactors, where substantial volumes of gas are used during the polymerization.

The amount of the activity retarder generally depends on the type of the gas phase polymerization system used and on the type of the catalyst used. The lowest amount of the activity retarder to be used and consequently the minimum flow rate of the introduction of the activity retarder into the reactor can be easily determined by the maximum heat exchange of the gas phase polymerization system, or by the maximum polyolefin production which does not induce the formation of agglomerates. Furthermore, the highest amount of the activity retarder to be used and hence the maximum flow rate of the introduction of the activity retarder into the reactor can be directly determined by the highest value of the concentration of impurities which may be introduced by the gases and the reactants into the reactor, when the quality of the reactants fluctuates.

In particular, if the minimum rate of introduction of the activity retarder is too low, it has been observed that, during the polymerization, the polymer production can drop appreciably to a level such that the introduction of the activity retarder has to be stopped. In this case, the drop in production can become unavoidable and the content of catalyst residues in the polymer can increase significantly. Advantageously, this drawback is easily mitigated by virtue of the fact that the activator is introduced continuously into the reactor and that its rate of introduction can be increased.

It has also been found that if the rate of introduction of the activity retarder is too high, i.e. if the molar ratio of the amount of activity retarder introduced to the amount of alpha-olefin or alpha-olefins introduced is excessive, the polymer production falls, or the content of catalyst residues in the polymer can increase considerably. Moreover, an excessive amount of the activity retarder may produce a non-homogeneous gaseous reaction mixture and may lead to difficulty in controlling the polymerization rate.

According to the present invention, it has also been discovered that the molar rate of the amounts of activator and activity retarder introduced, and also the rates of introduction of these two agents, have to be varied with time in order to keep the polymerization rate substantially constant when slight fluctuations occur in the quality of the reactants or of the catalyst, or in the supply of catalyst to the reactor. It is estimated that a polymerization rate is considered to be substantially constant with time when the amount of polyolefin produced per hour does not vary by more than 5% by weight, preferably by more than 3% by weight.

In another variant of the process, it has also been discovered that the rates of introduction of the activitor and activity retarder and the molar ratio of the amounts of the two agents introduced can be modified with time in order to keep substantially constant the content of transition metal in the polymer produced when the quality of the reactants or of the catalyst, or the supply of catalyst to the reactor, fluctuates during the polymerization. It is estimated that this content is considered to be substantially constant when the content by weight of transition metal in the polymer does not vary by more than 10%, preferably by more than 5%.

A gas phase polymerization process is generally carried out by maintaining substantially constant the operating conditions, such as the partial pressures of the main constituants of the gaseous reaction mixture, the total pressure, the catalyst feeding rate, the height or the weight of the fluidized bed, the polymerization temperature, the gas velocity and the polymer withdrawing rate. Under these circumstances, the polymerization rate can be easily determined, because it is directly related to the polymer production (i.e. to the polymer withdrawing rate), or to the alpha-olefin feeding rate, or to the difference between the inlet gas temperature and the exit gas temperature in the fluidized bed.

Thus, for example, when it is observed, during the polymerization, that the polyolefin production is tending to increase or that the content of transition metal in the polymer produced is tending to decrease, because of an unexpected drop in the impurities in the alpha-olefins or alpha-olefins introduced into the reactor, or because of using a new catalyst which is slightly more active than the previous one, or again because of a greater supply of catalyst to the reactor than was anticipated, the rate of introduction of the activity retarder is then increased so as to keep constant the polymerization rate, in particular the polymer production, or the content of transition metal in the polymer produced. If the rate of introduction is not varied or if this variation is too small, the adverse effects of superactivation will rapidly occur with the appearance of hot spots and agglomerates in the bed. If on the other hand, it is desired to avoid an excessive increase in the rate of introduction of the activity retarder, the amount of activator introduced can advantageously be reduced.

Conversely, when it is observed, during the polymerization, thatthe polyolefin production is tending to decrease or that the content of transition metal in the polymer produced is tending to increase, the rate of introduction of the activity retarder is then reduced so as to keep constant either the polymerization rate, in particular the polymer production, or the content of transition metal in the polymer produced. If the rate of introduction is not varied or if this variation is too small, the polymer production unavoidably falls and the content of transition metal in the polymer increases. If as a result of this variation in the rate of introduction, the amount of activity retarder introduced is reduced to its minimum level, it is then recommended to increase the rate of introduction of the activator to an appropriate value in order to keep constant the polymerization rate or the content of transition metal in the polymer produced.

It has been observed, surprisingly, that, by virtue of the process of the present invention, it is now possible to carry out a gas phase polymerization at higher temperatures and under higher alpha-olefin pressures than previously. One of the unexpected advantages of the process is that the polyolefin production can be increased by up to 25% and the risk of forming hot spots and agglomerates can be reduced substantially. By virtue of the continuous introduction of the activator and activity retarder in very small amounts varying with time, it is now possible to produce polyolefins of an excellent quality,with a high degree of reproducibility, despite substantial and unexpected variations in the quality of the reactants, in the activity of the catalyst, or in the supply of the catalyst to the reactor. It has been noticed, surprisingly, that the antagonistic effects of the activator and activity retarder on the polymerization rate are not exerted direct so as to cancel each other out, but so as to produce an overall effect which is different from that normally expected to be obtained simply by juxtaposition of their individual effects. It has actually been-found that the effects produced by the two agents appear with a different intensity and with a time lag. More particularly, the effects produced by the activator appear slowly with time, whereas those produced by the activity retarder appear almost immediately. Thus the gas-phase polymerization of alpha-olefins can be controlled under improved conditions by combining the particular uses of these two agents. For example, the polymer production can be regulated firstly by roughly setting the rate of introduction of the activator and then by precisely and appropriately selecting the rate of introduction of the activity retarder, which makes it possible to achieve the desired level of production. When an unexpected variation occurs in the quality of the reactants or the catalyst, or in the supply of catalyst to the reactor, the polymerization rate can be kept constant firstly by modifying the rate of introduction of the activity retarder and then, if the effect of this first modification proves insufficient, by modifying the rate of introduction of the activator.

Another unexpected advantage of the present invention is that polyolefins thus manufactured have an appreciably reduced content of transition metal and, consequently, are of a superior quality, without forming agglomerates. Another advantage of the process arises from the fact that the control of the polymerization is not associated with h measurement oft he concentrations of activator and activity retarder in the polymerization medium, and that the polymer production can be regulated direct via the rates of introduction of the activity retarder, without substantially changing all the other operating conditions of the gas phase polymerization.

By virtue of this process, it is also possible to use very high yield catalysts whose polymerization activity generally is particularly sensitive to slight variations in the polymerization conditions. These catalysts can be introduced into the reactor continuously or intermittently. It is possible to use more active catalysts, in particular catalysts of the Ziegler-Natta type based on magnesium, halogen, titanium and/orvana- dium and/or zirconium. It is also possible to increase the activity of these catalysts by the addition of greater amounts of a cocatalyst usually selected from organometallic compounds of metals belonging to groups I, II or III of the periodic table of the elements, in particular from organo-aluminium, organozinc and organomagnesium compounds.

The cocatalyst can be identical to or different from the activator used in the present process. The Ziegler-Natta catalyst can be partially activated by the cocatalyst, prior to its introduction intothe reactor. It is also possible to use a modifier agent with the Ziegler-Natta catalyst. The modifier agent can be a selectivity control agent, such as an electron donor compound, more particularly an aromatic ester or a sil icon compound which is continuously introduced into the reactor, at a constant rate and in a constant molar ratio with the transition metal of the catalyst. The modifier agent can be identical to or different from the activity retarder used in the present process.

It is also possible to use a catalyst of high activity based on chromium oxide associated with a granular support based on a refractory oxide such as silica, alumina or aluminium silicate, and activated by a heat treatment at a temperature of at least 250°C and at most the temperature at which the granular support may start to sinter, preferably a temperature of between 350°C and 1000°C. The catalyst can be contacted with an organometallic compound prior to its introduction into the reactor. The organometallic compound has a metal belonging to groups I, II or III of the periodic table of the elements, and can be identical to or different from the activator used in the present process.

The catalyst of high activity can be used direct as such or in the form of a prepolymer. The conversion to prepolymer is generally carried out by bringing the catalyst into contact with the one or more alpha-olefins in amounts such thatthe prepolymer contains between 0.002 and 10 millimol of transition metal per gram. The catalysts can also be brought into contact with an organometallic compound of a metal belonging to groups I, II or III of the periodic table of the elements, in amounts such that the molar ratio of the amount of metal in the said organometallic compound to the amount of transition metal is between 0.1 and 50, preferably between 0.5 and 20. The organometallic compound can be identical to or different from the activator used in the present process. The catalyst of high activity, used direct or after a prepolymerization step, is introduced continuously or intermittently into the reactor.

The polymerization is carried out continuously in a fluidized and/or mechanically agitated bed reactor by techniques known per se and using equipment such as that described in French patent no. 2 207 145 or French patent no. 2 335 526. The process is particularly suitable for very large industrial reactors in which the least variation in the polymerization rate can very rapidly lead to adverse effects such as the formation of agglomerates. The gaseous reaction mixture containing the alpha-olefin(s) to be polymerized is generally cooled by means of at least one heat exchanger located outside the reactor, before being recycled via a recycling line. The activity retarder can be introduced direct into the reactor, preferably into a zone of the reactor where the activity retarder is dispersed rapidly, for example below a fluidization grid. It can also be introduced into the line for recycling the gaseous reaction mixture or into the line for supplying the reactor with alpha-olefins. If the recycling line includes a means for separating the gas from the fine solid particles entrained with this gas, such as a cyclone, and a means for recycling these fine particles direct into the polymerization reactor, the activity retarder can be introduced at any point on the gas/solid separation means or on the means for recycling the fine particles. It can preferably be introduced into the recycling line upstream from the heat exchanger. It can also be introduced into the catalyst feeding line. The activity retarder can advantageous be introduced at two or more points in the polymerization system.

The activitor is introduced separately from the activity retarder into the reactor. It can be introduced direct into the reactor, preferably into a zone of the reactor where the activator is dispersed rapidly, in particular below a fluidization grid. It can also be introduced into the line for recycling the gaseous reaction mixture, upstream or downstream of a heat exchanger. It can also be introduced into a line for supplying the reactor with a readily volatile liquid hydrocarbon or a liquid alpha-olefin.

The polymerization reaction is generally carried out under a pressure of 0.5 to 5 MPa and at a temperature of 0 to 135°C. The process is suitable for the polymerization of one or more alpha-olefins containing from 2 to 8 carbon atoms, in particularforthe polymerization of ethylene or propylene. It is particularly suitable for the copolymerization of ethylene with at least one alpha-olefin containing from 3 to 8 carbon atoms, or for the copolymerization of propylene with at least one alpha-olefin containing from 4 to 8 carbon atoms, if appropriate with ethylene and/or a non-conjugated diene. The gaseous reaction mixture can contain hydrogen and an inert gas selected for example from nitrogen, methane, ethane, propane, butane, isobutane, pentaneisopentane or hexane. When a fluidized-bed reactor is used, the fluidization speed of the gaseous reaction mixture passing through the bed is 2 to 10 times the minimum fluidization speed. The polymer manufactured is withdrawn from the reactor continuously or, preferably, intermittently.

### Example 1

The process is carried out in a fluidized-bed reactor for gas-phase polymerization, consisting of a vertical cylinder of diameter 0.9m and height 6m and surmounted by a tranquillization chamber. The reactor is provided in its lower part with a fluidization grid and with an external line for recycling gas, which connects the top of the tranquillization chamber to the lower part of the reactor, at a point below the fluidization grid. The recycling line is equipped with a compressor for circulating gas and a heat transfer means. In particular the lines for supplying ethylene, but-1- ene, hydrogen and nitrogen, which represent the main constituents of the gaseous reaction mixture passing through the fluidized bed, come out into the recycling line.

Above the fluidization grid, the reactor contains a fluidized bed consisting of 400kg of a linear low- density polyethylene powder made up of particles with a weight-average diameter of 0.7mm. The gaseous reaction mixture, which contains 30% of ethylene, 12% of but-1-ene, 6% of hydrogen, 51% of nitrogen and 1% of ethane by volume, passes through the fluidized bed under a pressure of 1.6 MPa, at 80°C and at an ascending fluidization speed of 0.5m/s.

A catalyst identical to the one described described in Example 1 of French patent no. 2 405 961 is introduced intermittently into the reactor, the said catalyst containing magnesium, chlorine and titanium and having been converted beforehand to a prepolymer containing 40g of polyethylene per millimol of ti- tantium and an amount of tri-n-octylaluminium (TnOA) such that the molar ratio Al/Ti is equal to 1.10 ± 0.05. The rate of introduction of the prepolymer into the reactor is 0.6 kg/h.

During the polymerization, a solution of dimethylformamide (DMF) in n-hexane, containing 0.004 mol of DMF per litre, is introduced continuously into the line for recycling the gaseous reaction mixture, at a point situated downstream of the heat transfer means. Simultaneously, a solution of triethylaluminium (TEA) in n-hexane, containing 0.1 mol of TEA per litre, is introduced continuously into the line for recycling the gaseous reaction mixture, at a point situated upstream and in the proximity of the heat transfer means. A copolymer of ethylene and but-1-ene, with a density equal to 0.918, is manufactured at a rate of 100 ± 3 kg per hour.

This production is kept constant at this value throughout the polymerization by virtue of the DMF solution and TEA solution introduced, which are adjusted to mean rates of 210 ml/h and 330 ml/h, respectively, for the greater part of the polymerization time. No formation of agglomerates was observed over several days of continuous polymerization under these conditions. Furthermore, the copolymer manufactured in this way, containing about parts per million of titanium by weight, has a constant quality despite the unpredictable fluctuations in the impurities brought by the constituents of the gaseous reaction mixture and despite the random variations in the activity of the prepolymer, in which the molar ratio Al/Ti fluctuates between about 1.05 and 1.15. Moreover, throughout the polymerization, it was noted that the proportions of carbon monoxide and carbon dioxide in the ethylene supplied to the reactor varied between about 0.01 and 0.05 part per million by volume (vpm) and between about 0.1 and 0.5 vpm, respectively. During the polymerization period in which the proportions of carbon monoxide and carbon dioxide were at their lowest, the rate of introduction of the DMF solution had to be increased to 300 ml/h in order to keep the copolymer production constant. Conversely, during the period in which the proportions of carbon monoxide and carbon dioxide were at their highest, the rate of introduction of the DMF solution had to be reduced to 80 ml/h in order to keep the copolymer production constant. It was also noted that, for relatively short time, the proportions of carbon monoxide and carbon dioxide in the ethylene supplied to the reactor increased to 0.1 vpm and 1 vpmrespectively. To keep the copolymer production constant, the rates of introduction of the DMF solution and TEA solution had to be set at 370 ml/h and 660 ml/h, respectively, during this period.

When the quality of the ethylene fluctuated during the polymerization, the molar ratio of the amount of DMF introduced to the amount of ethylene and but-1-ene introduced had to be modified within the range from 0.9 x 10-⁷ to 4 x 10-⁷ and the molar ratio of the amount of TEA introduced to the amount of ethylene and but-1-ene introduced had to be modified within the range from 0.9 x 10-^{s} to 1.8 x 10-^{s}.

### Example 2

The process is performed under conditions which are exactly identical to those described in Example 1, except for the fact that instead of DMF, it is used tetrahydrofuran.

The copolymer of ethylene with but-1-ene is obtained in a way identical to that of Example 1.

### Example 3 (Comparative)

The process is performed under conditions which are exactly identical to those described in Example 1, except for the fact that no DMF solution and no TEA solution are introduced.

It is found very rapidly that the output of linear low density polyethylene varies with time in limits lower than 97kg per hour and higher than 103kg per hour, and that agglomerates of molten polymer are formed during the copolymerization.

## Claims

1. A process for continuous gas-phase polymerization of one or more alpha-olefins in a fluidized and/or mechanically agitated bed reactorwith the aid of a catalyst based on a transition metal belonging to groups IV, V or Vl of the periodic table of the elements, in the presence of an activator and an activity retarder, characterized in that, during the polymerization, the activator and the activity retarder are introduced continuously and simultaneously into the reactor in very small amounts, in a molar ratio and at rates which are varied with time, the molar ratio of the amount of activity retarder introduced to the amount of alpha-olefin or alpha-olefins introduced being 10-⁸ to 10⁻⁵ and the molar ratio of the amount of activator introduced to the amount of alpha-olefin n or alpha-olefins introduced being 10-⁷ to 10-⁴, and so as to keep substantially constant either the polymerization rate or the content of transition metal in the polymer produced.

2. The process according to Claim 1, characterized in that the activity retarder and activator are introduced into the reactor in an amount such that the molar ratio of retarder to olefin or olefins is 5 x 10⁻⁸ to 2 x 10⁻⁶ and the molar ratio of activator to olefin or olefins is 2 x 10-⁷ to 5 x 10-^{s}.

3. The process according to Claim 1 or 2, characterized in that the activity retarder is selected from polymerization inhibitors and electron donorcom- pounds.

4. The process according to Claim 3, characterized in that the polymerization inhibitor is selected from carbon monoxide, carbon dioxide, carbon disulphide, carbon oxysulphide, nitrogen oxides and peroxides, alcohols, thiols, aldehydes, ketones, oxygen and water.

5. The process according to Claim 3, characterized in that the electron donor compound is selected from amines, amides, phosphines, sulphoxides, sulphones, esters, ethers and thioethers.

6. The process according to any one of the preceding Claims, characterized in that the activator is an organometallic compound of a metal belonging to groups I, II or III of the periodic table of the elements.

7. The process according to Claim 6, characterized in that the organometallic compound is an organoaluminium, organozinc or organomagnesium compound.

8. The process according to any one of the preceding Claims, characterized in that the catalyst is a catalyst of the Ziegler-Natta type based on magnesium, halogen, titanium and/or vanadium and/or zirconium.

9. The process according to any one of Claims 1-7, characterized in that the catalyst is based on chromium oxide associated with a granular support based on a refractory oxide and activated by a heat treatment.

10. A process according to any one of Claims 1-9, characterized in that the alpha olefin is ethylene or a mixture t hereof wit h at least one alpha olefin of 3-8 carbon atoms.

## Patentansprüche

1. Verfahren zur kontinuierlichen Gasphasenpolymerisation eines oder mehrerer alpha-Olefine in einem Wirbelschicht- und/oder einem mechanisch gerührten Bettreaktor mit Hilfe eines Katalysators auf der Grundlage eines Übergangsmetalls, das zu den Gruppen IV, V oder VI des Periodensystems der Elemente gehört, in Gegenwart eines Aktivators und eines Aktivitätsinhibitors, dadurch gekennzeichnet, daß während der Polymerisation der Aktivator und der Aktivitätsinhibitor kontinuierlich und gleichzeitig in geringen Mengen in den Reaktor eingeführt werden in einem Molverhältnis und bei Geschwindigkeiten, die mit der Zeit geändert werden, wobei das Molverhältnis der eingeführten Aktivitätsinhibitormenge zur Menge des eingeführten alpha-Olefins oder der eingeführten alpha-Olefine 10⁻⁸ bis 10⁻⁵ und das Molverhältnis der eingeführten Aktivatormenge zur Menge des eingeführten alpha-Olefins oder der eingeführten alpha-Olefine 10-⁷ bis 10-4 beträgt und somit im wesentlichen entweder die Polymerisationsgeschwindigkeit oder der Gehalt an Übergangsmetall im hergestellten Polymer konstant gehalten werden.

2. Verfahren nach Anspruch 1, dadurch gekennzeichnet, daß der Aktivitätsinhibitor und derAktivator in den Reaktor in einer Menge eingeführt werden, daß das Molverhältnis des Inhibitors zu dem Olefin oder zu den Olefinen 5 x 10⁻⁸ bis 2 x 10⁻⁶ beträgt und das Molverhältnis des Aktivators zu dem Olefin oder zu den Olefinen 2 x 10-⁷ bis 5 x 10⁻⁵ beträgt.

3. Verfahren nach Anspruch 1 oder 2, dadurch gekennzeichnet, daß der Aktivitätsinhibitor ausgewählt ist aus Polymerisationsinhibitoren und Elektronendonorverbindungen.

4. Verfahren nach Anspruch 3, dadurch gekennzeichnet, daß der Polymerisationsinhibitor ausgewählt ist aus Kohlenmonoxid, Kohlendioxid, Schwefelkohlenstoff, Kohlenoxysulfid, Stickoxiden und Peroxiden, Alkoholen, Thiolen, Aldehyden, Retonen, Sauerstoff und Wasser.

5. Verfahren nach Anspruch 3, dadurch gekennzeichnet, daß die Elektronendonorverbindung ausgewählt ist aus Aminen, Amiden, Phosphinen, Sulfoxiden, Sulfonen, Estern, Ethern und Thioethern.

6. Verfahren nach einem der vorangehenden Anprüche, dadurch gekennzeichnet, daß der Aktivator eine organometallische Verbindung eines Metalls, das zu den Gruppen I, 11 oder 111 des Periodensystems der Elemente gehört, ist.

7. Verfahren nach Anspruch 6, dadurch gekennzeichnet, daß die organometallische Verbindung eine Organoaluminium-, Organozink- oder Organomagnesiumverbindung ist.

8. Verfahren nach einem der vorangehenden Anprüche, dadurch gekennzeichnet, daß der Katalysator ein Katalysator vom Ziegler-Natta-Typ ist auf der Grundlage von Magnesium, Halogen, Titan und/oder Vanadin und/oder Zirkon.

9. Verfahren nach einem der Ansprüche 1-7, dadurch gekennzeichnet, daß der Katalysator auf der Grundlage von Chromoxid mit einem körnigen Träger auf der Grundlage eines gebrannten Oxids verbunden ist und durch Hitzebehandlung aktiviert wird.

10. Verfahren nach einem der Ansprüche 1-9, dadurch gekennzeichnet, daß das alpha-Olefin Ethylen ist oder ein Gemisch davon von mindestens einem alpha-Olefin mit 3 bis 8 Kohlenstoffatomen.

## Revendications

1. Procédé de polymérisation continue en phase gazeuse d'une ou plusieurs alpha-oléfines dans un réacteur à lit fluidisé et/ou agité mécaniquement, à l'aide d'un catalyseur à base d'un métal de transition appartenant aux groupes IV, V ou VI du tableau périodique des éléments en présence d'un agent d'activation et d'un agent ralentisseur d'activité, caractérisé en ce que, pendant la polymérisation, l'agent d'activation et l'agent ralentisseur d'activité sont introduits de façon continue et simultanée dans le réacteur en quantités très faibles dans un rapport molaire et à des débits qui sont modifiés avec le temps, le rapport molaire de la quantité de l'agent ralentisseur d'activité introduite à la quantité d'alpha-oléfine ou d'alpha-oléfines introduite étant de 10⁻⁸ à 10-s et le rapport molaire de la quantité d'agent d'activation introduite à la quantité d'alpha-oléfine ou d'alpha-oléfines introduite étant de 10-⁷ à 10-⁴ et de manière à maintenir sensiblement constante soit la vitesse de polymérisation, soit la teneur en métal de transition dans le polymère produit.

2. Procédé suivant la revendication 1, caractérisé en ce que l'agent ralentisseur d'activité et l'agent d'activation sont introduits dans le réacteur en une quantité telle que le rapport molaire de l'agent ralentisseur à l'oléfine ou aux oléfines soit de 5 x 10⁻⁸ à 2 x 10⁻⁶ et le rapport molaire de l'agent d'activation à l'oléfine ou aux oléfines soit de 2x10⁻⁷ à 5x10^{-5.}

3. Procédé suivant la revendication 1 ou 2, caractérisé en ce que l'agent ralentisseur d'activité est choisi parmi les inhibiteurs de polymérisation et les composés donneurs d'électrons.

4. Procédé suivant la revendication 3, caractérisé en ce que l'inhibiteur de polymérisation est choisi parmi le monoxyde de carbone, le dioxyde de carbone, le disulfure de carbone, l'oxysulfure de carbone, les oxydes et peroxydes d'azote, les alcools, les thiols, les aldéhydes, les cétones, l'oxygène et l'eau.

5. Procédé suivant la revendication 3, caractérisé en ce que le composé donneur d'électrons est choisi parmi les amines, les amides, les phosphines, les sulfoxydes, les sulfones, les esters, les éthers et les thioéthers.

6. Procédé suivant l'une quelconque des revendications précédentes, caractérisé en ce que l'agent d'activation est un composé organométallique d'un métal appartenant aux groupes I, Il ou III du tableau périodique des éléments.

7. Procédé suivant la revendication 6, caractérisé en ce que le composé organométallique est un composé organoaluminique,organozincique ou organomagnésien.

8. Procédé suivant l'une quelconque des revendications précédentes, caractérisé en ce que le catalyseur est un catalyseur du type Ziegler-Natta à base de magnésium, d'halogène, de titane et/ou de vanadium et/ou de zirconium.

9. Procédé suivant l'une quelconque des revendications 1 à 7, caractérisé en ce que le catalyseur est à base d'oxyde de chrome associé à un support granulaire à base d'un oxyde réfractaire et activé par un traitement thermique.

10. Procédé suivant l'une quelconque des revendications 1 à 9, caractérisé en ce que l'alpha-oléfine est l'éthylène ou un mélange de celui-ci avec au moins une alpha-oléfine de 3 à 8 atomes de carbone.
